# EUROPEAN PATENT SPECIFICATION

(11) **EP 4 077 856 B1**
(45) Date of publication and mention of the grant of the patent: **18.02.2026**
(21) Application number: 20835739.2
(22) Date of filing: 16.12.2020
(51) Int. Cl.: E06B 3/54, E06B 5/02, E04G 21/24

(54) **A MOUNTING ASSEMBLY COMPRISING AN ADJUSTABLE MOUNTING AND A STRUCTURAL ELEMENT**
EINE BEFESTIGUNGSVORRICHTUNG, BESTEHEND AUS EINER VERSTELLBAREN HALTERUNG UND EINEM STRUKTURELEMENT.
ENSEMBLE DE MONTAGE COMPRENANT UN SUPPORT RÉGLABLE ET UN ÉLÉMENT STRUCTUREL

(30) Priority: 17.12.2019 DK PA201970781
(43) Date of publication of application: 26.10.2022
(73) Proprietor: Lasse Ramskov Holding ApS, 2650 Hvidovre (DK)
(72) Inventor: RAMSKOV, Lasse Fomsgaard, 2840 Holte (DK)
(74) Representative: Holme Patent A/S
(86) International application number: PCT/EP2020/086378
(87) International publication number: WO 2021/122714

(56) References cited:
- GB-A- 2 240 805
- US-A- 4 193 225
- US-A1- 2007 107 329

## Description

The present invention relates to a mounting assembly comprising at least an adjustable mounting and a structural element.

There is often a need to temporary place posters, plates, panes etc, in connection with a solid structure. One example is when posters/exhibition displays are placed on an exhibition wall, another is, if an occupied building is going to be remodelled, the portions of the building that will be under construction must be separated from the portions that will remain occupied in order to control the dust created by the remodelling activities as well as to protect the occupants from the physical construction activity.

Frequently, temporary partitions made from plastic curtains are simply nailed, screwed or stapled to the floor, ceiling and abutting walls, resulting in damage to these surfaces. In other installations, a curtain is taped or otherwise adhered to the walls and ceilings. In these cases, if the tape stick, as the tape is removed, chips of paint are usually pulled off with the tape or an adhesive residue from the tape is left behind.

In a similar way, if an interim window or interim door are to be used, these have conventionally been constructed as simple structures in the form of a wood frame with a sheet of plastic spanning the opening in said frame. However, such interim closures, even though they have a simple structure, are often relatively expensive to manufacture, as the openings which e.g. the interim closures must seal off, often have different dimensions whereby each interim window and/or door must be individually constructed on site. Furthermore, interim windows or doors will not prevent unauthorized persons from entering the building, as said persons quickly can cut an opening in the plastic sheet, nor will they provide the desired insulation in cold or warm weather.

These problems have been remedied by the temporary closure disclosed in WO2005031087. Said document discloses a temporary closure in which a quadrangular frame is spanned by a solid pane of e.g. glass, thereby both providing a higher degree of isolation, as well as effectively preventing unauthorized personal from gaining access to the building. The frame comprises four corners comprising pipes which telescopically can be connected to pipe on four side member whereby the dimensions of the quadrangular frame can be changed, e.g. in dependence of different structural openings.

However, one of the disadvantages of this conventional interim closure, is that since the pane is secured to the frame at the corners, both the frame and the pane will be dismantled when the dimensions are changed, making it time consuming and difficult to adjust the frame, while maintaining the pane at a centre location.

US 2007/107329 A1 shows an example of a mounting assembly with an adjustable mounting according to the preamble of claim 1.

It is therefore a first aspect of the present invention to provide an adjustable mounting having components of a simple and relatively inexpensive character, which easily and economically can be mass-produced and readily used by anyone without requiring skill or training,
it is a second aspect of the present invention to provide an adjustable mounting which can be used to temporary place plates/panes at a desired position, and easily alter said position if required,
it is a third aspect of the invention to provide a adjustable mounting for fastening a pane in a structural frame, and which ensures that the pane is maintained at a centre location when the dimensions of the structural frame is adjusted,
it is a fourth aspect of the present invention to provide a structural frame comprising one or more adjustable mounting(s), and wherein said frame easily can be customized and altered in relation to a new surroundings or openings to be closed and/or sealed off by the structural frame, and
it is a fifth aspect of the present invention to provide an interim closure and/or a partition or part of a partition, using the adjustable mounting according to the invention.

These and further aspects are achieved according to the present invention by providing a mounting assembly according to appended claim 1.

The adjustable mounting of said mounting assembly according to the invention can be used in a large number of different constructions and/or structures, in which a pane and/or plate are connected to a structural element such as a mounting profile in an exhibition stand, a structural frame, a guardrail, etc.

Since the connector assembly is arranged for telescopically connecting the first and second mounting unit, the pane can easily be placed in the correct position, e.g. at the correct desired height or at a desired position relative to the structural element.

The connector assembly arranged for telescopically connecting the first and second mounting unit, may in a preferred embodiment comprise a housing having a longitudinal track at a first side; and a telescopic member arranged for being displaced in the longitudinal direction of said track, i.e. the position of the telescopic member can be adjusted by sliding it back and forth in/along said longitudinal track.

The telescopic member may preferably comprise a measurement system, arranged for measuring the telescopic extension of the telescopic member in the track. Said measuring device can be any suitable measuring means, **e.g.** a proximity sensor, i.e. a sensor arranged to detect/monitor the distance between two points without any physical contact, or a laser scanner arranged for during operation emitting a laser beam in the lengthwise direction of the adjustable mounting, and measure the time it takes for said laser beam to be reflected back from a measuring point. In these embodiment the adjustable mounting may further comprise means for generating and processing data for the relevant measurements and display these on a display, e.g. placed on the front of the telescopic member, thereby showing the telescopic extension of the mounting.

It is however preferred that the measuring system is a linear graduation placed on the first (front) side of the telescopic member, in a position of use. Said linear graduation may be marks spaced at a constant length apart thereby providing a visual scale, e.g. in centimetres or inches. In this way an especially simple and inexpensive adjustable mounting according to the invention is provided, in which the telescopic extension of said mounting easily can be viewed by the operator during use.

The adjustable mounting may further comprise a first fastening means for securing the telescopic member at different e.g. predetermined positions along the track. Said fastening means can be a simple nut and/or screw, but can in principal be any means that will ensure that the telescopic member can be either displaced or maintained at a desired position along said track.

In a preferred embodiment the first mounting unit is connected to, or integrated with, the telescopic member, and the second mounting is connected to or integrated with the housing of the adjustable mounting, thereby providing a simple embodiment with few components.

The first and second mounting unit may be any kind of attachment means able to attach the adjustable mounting to the pane and the structural element, respectively.

However in an advantageous embodiment the first mounting unit comprises a bolt (or the like), arranged for extending though an opening in the pane, and a nut which can be tightened for securing/fastening the first mounting unit to the pane.

Depending on the hardness and nature of the pane, the first mounting unit may comprise a first and a second distribution plate arranged for being placed on either side of the pane, and being arranged for distributing the applied force, when the nut is tightened, to a larger area of the pane. This is especially advantageously if the pane is made of a brittle material such as glass or the pane is not solid, e.g. a net. Each distribution plate may further comprise an elastomer disc for abutting the pane thereby both ensuring a firm grip and/or preventing the pane from being scratched when the bolt/nut arrangement is tightened.

In order to connect the telescopic member to the first mounting unit, the first distribution plate may comprise a centrally recess matching the dimensions of a first end of the telescopic member. Said first end further comprise one or more projections, arranged for being inserted in complementary grooves placed in the recess. The combination of the recess, and the projection/groove arrangement prevents any sideways and/or lengthwise movement of the telescopic member in relation to the first distribution plate, thereby ensuring that the components are placed in the correct position when the bolt is inserted though matching openings in the first and second distribution plate, openings in the corresponding elastomer discs, and an opening in the first end of the telescopic member. A washer may be placed on the top of the telescopic member, in order to prevent damage to its upper side.

In order to prevent the nut from becoming loose during use, e.g. due to vibrations, the first locking unit may comprise a suitable locking mechanisms e.g. a lock washer, a jam nut, a safety pin, etc.

In a preferred embodiment the second mounting unit is arranged for quick and easy connection with the structural element.

According to the invention, the second mounting unit comprises a first elongated hook, arranged perpendicular to the longitudinal direction of the mounting, and the structural element comprises a complementary elongated notch. It is preferred that the hook and notch have a shape and geometry configured to exactly match, or at least substantially match, with each other, thereby providing a simple and reliable way of releasably attaching the second mounting unit to the structural element, where the hook will be guided to a correct placement in the notch by their mutual geometry of the hook/notch.

When the hook is placed in the notch, the second mounting unit may further comprise a second fastening means, e.g. a bolt/nut for ensuring that the second mounting unit remains at the correct position relative to the structural element. Said screw may advantageously be a flap screw which can be manipulated quickly and easily without use of tools.

The invention relates to a mounting assembly comprising at least one structural element, and an adjustable mounting.

The structural element comprises a notch, said notch may be placed in only a section of the structural element, it is however preferred that the structural element is an elongated structural element, and that said notch is placed in the entire length of the elongated structural element thereby ensuring that the adjustable mounting can be displaced in said notch in the entire length of the elongated structural element, thereby providing a higher degree of flexibility.

The present invention also relates to a structural frame according to claim 10.

Within the context of the present invention the term "structural frame" is a substantially rigid structure that surrounds a pane such as a door, a windowpane, a wood plate, at net etc. The shape of the structural frame can be any desired shape, and said term is accordingly not restricted to frames having four right angles, e.g. a equilateral square or a rectangle. A structural frame can within the context of the present invention equally well have other shapes, such as other quadrilateral shapes e.g. a trapezoid shape, or alternatively a triangular, a pentagonal, or a hexagonal shape.

In a preferred embodiment said structural frame is formed by a number of elongated structural element each having a longitudinal notch for receiving the second mounting unit, thereby providing a structural frame in which a pane easily can be placed in a correct position, e.g. in the middle of the structural frame using one or more adjustable mounting(s) according to the invention.

It is furthermore preferred that the pane is secured in the structural frame using the adjustable mounting(s) as the pane thereby will float in the frame, whereby the position of said pane in the frame easily can be adjusted, simply by adjusting the telescopic extension of the one or more adjustable mountings according to the invention.

Using the adjustable mounting offers the advantage that said mounting can be attached to the pane at one location e.g. a storage room, via the first mounting unit, and then connected to a structural frame via the second mounting unit at a different location e.g. at a construction site. In this way the pane and optionally the adjustable mountings can be packed, stored and transported separately from the elements of the structural frame. This simplifies the mounting of the pane in said frame. A further advantage of a adjustable mounting according to the present invention is that the same adjustable mountings can be used for different types and dimensions of structural frames thereby providing a high degree of standardization.

Since the adjustable mounting is securely fastened to both the elongated structural elements, via the second mounting unit, and the pane, via the first mounting unit, the pane will always remain in the structural frame, preferably in a centre position. However, in order to provide an effective insulation, e.g. if said frame is used as an interim window, or prevent dust from spreading when the frame is used as a partition, it is preferred that there is not provided any openings/gap between the pane and the structural frame during use.

It is in this respect preferred that the elongated structural element comprise a channel/opening arranged for displaceably receiving an area of the pane therein. The channel/opening preferably has a cross-sectional height perpendicular to he length of the elongated structural element, which substantially corresponds to the thickness of the pane, such that said pane in addition to being connected to the structural element via the adjustable mounting also is guided in and securely held by the channel. Each channel may e.g. form a U, seen in cross section.

In a preferred embodiment the channel has a depth, perpendicular to it's length, which is larger than the telescopic extension of the adjustable mounting, thereby ensuring that irrespectively of the telescopically extension of said mounting, an area/part of the pane will remain in the channel. For instance, if a structural frame is provided, and the telescopic extension of the adjustable mounting is 10 cm, the channel in the elongated structural elements may have a depth of 15 cm, such that when a pane is inserted into said channel, it is possible to provide a sufficient overlap between pane and elongated element, thereby ensuring that at least a certain portion of the pane remains in the channel during telescopic displacement of the adjustable mounting.

In order to provide the desired channel, the elongated structural element may in a preferred embodiment be made as an substantially flat integral component, wherein the notch is placed at one longitudinal edge, and the opening to the channel is placed at the other longitudinal edge.

The pane is preferably made of a solid material, e.g. Plexiglas, glass, wood, metal etc., and may be selected depending on the intended use of the structural frame. For instance a pane of glass or Plexiglas may be useful for an interim window, whereas an interim door or interim partition may have a solid pane of wood. Using a solid pane both has the advantage that it will both have good insulation properties, and provide a good security against the intrusion of unauthorized persons, as the solid pane cannot easily be broken or cut open in the same way as panes consisting of a flexible plastic sheet. However, the pane may within the scope of the present invention also be made of e.g. a net or similar construction.

The present invention also relates to a structural frame according to claim 10.

It is further preferred that said four elongated structural elements are connected at each corner by a corner assembly arranged for telescopically displacing two elongated structural elements, one on either side of the corner assembly, thereby providing a structural frame in which it is very easy to adjust the height and/or width of the frame by simply adjusting the telescopic displacement of the respective elongated elements in the corner assembly and the adjustable mountings.

Since the pane is attached to the elongated structural elements by means of the adjustable mounting, the pane will float in said structural frame and if the telescopic member is not fixated in the track by the optionally first fastening means, the telescopic extension of said adjustable mounting will simply follow the extension of the elongated structural element in the corner assembly. It is thereby possible to provide a structural frame which matches/fits each and every structural opening, even though there may be variations between the respective openings.

Such a structural frame may be used as an interim closure, e.g. an interim door or an interim window, as a partition or part of a partition e.g. for preventing dust from spreading during renovation work, as a guardrail, etc.

Furthermore, when e.g. a window opening later is closed by a permanent window, the interim window can easily be adjusted to fit a different opening with a different size. The structural frame can accordingly be used several times, both at the same construction site and on different construction sites.

In a preferred embodiment the corner assembly comprises a housing defining a first and a second groove arranged at a 90 degree angle to each other, and wherein the first groove is arranged for telescopically receiving and/or displacing a first elongated structural element and the second groove is arranged for telescopically receiving and/or displacing a second elongated structural element, and wherein the corner assembly further comprises a first and a second locking mechanisms, e.g. locking clamps, arranged for independently of each other releasably fastening the first and second elongated structural element in the corresponding first and second groove. Such a corner assembly is described in further details in the applicants co-pending application, which is incorporated herein by reference.

The first and second locking mechanism may be any desired mechanism arranged for fastening the elongated structural element at desired position in the corresponding groove. It is however preferred that said locking mechanism does not require any tools for being operated, and/or that that said locking mechanism does not comprise a bolt/nut or similar structure.

In a preferred embodiment the first and second locking mechanism for fastening the elongated structural element to the corner assembly may each comprises a toggle clamp comprising a toggle handle for actuating a toggle mechanism between a clamped position, where the elongated structural element is secured and/or fixed to the corner assembly by frictional force, and a released position where the elongated structural element can be displaced in the respective groove of the housing. The toggle handle is preferably arranged for pivoting between the clamped and the released position about a pivot axis, such that the user only has to lift and or press on the toggle handle in order to shift between the clamped and the released position. This will not only allow the toggle clamp assembly to be operated without the need of any tools, but also that any construction **e.g.** a structural frame using one or more corner assemblies according to the invention, easily can be assembled, adjusted, and or dismantled, while maintaining the stability of the frame.

The adjustable mounting, as well as the structural elongated element and/or the components of the corner assembly can be made of any hard and durable material e.g. a metal. It is however preferred that they are made of a light and inexpensive material **e.g.** of a suitable plastic materiel, such as a thermoplastic polymer or composite. In a preferred embodiment the components are made of material comprising polyamide, **e.g.** aliphatic polyamides such as nylon PA6 and PA6/6, as these materials maintains high thermal and mechanical properties in combination with good toughness and processability. Suitable commercially polymers are available as Akulon^{®}, manufactured by DSM Engineering Plastics.

The invention will be explained in greater detail below, describing only exemplary embodiments with reference to the drawing, in which
**Fig.** 1 is a perspective view of an adjustable mounting according to the invention in a contracted position,
**Fig.** 2 shows a front perspective view of the adjustable mounting of fig. 1 in an extended position,
Fig. 3 shows the adjustable mounting of fig. 2 from a lower perspective,
Fig. 4 is an exploded view of the adjustable mounting of fig. 1, and
Fig. 5 shows a perspective view of the adjustable mounting attached to a pane and an elongated structural element,
Fig. 6 is a side view of the adjustable mounting attached to a pane and an elongated structural element, in a contracted position, and
Fig. 7, is a side view of the adjustable mounting attached to a pane and an elongated structural element, in an extracted position.
Fig. 8 shows a structural frame incorporating four adjustable mountings as shown in fig. 1.

The invention will be described below with the assumption that the adjustable mounting is used in a structural frame, however this assumption is not to be construed as limiting, and the adjustable mounting can just as easily be used for connecting a pane, e.g. a poster to a structural element in the form of a rail.

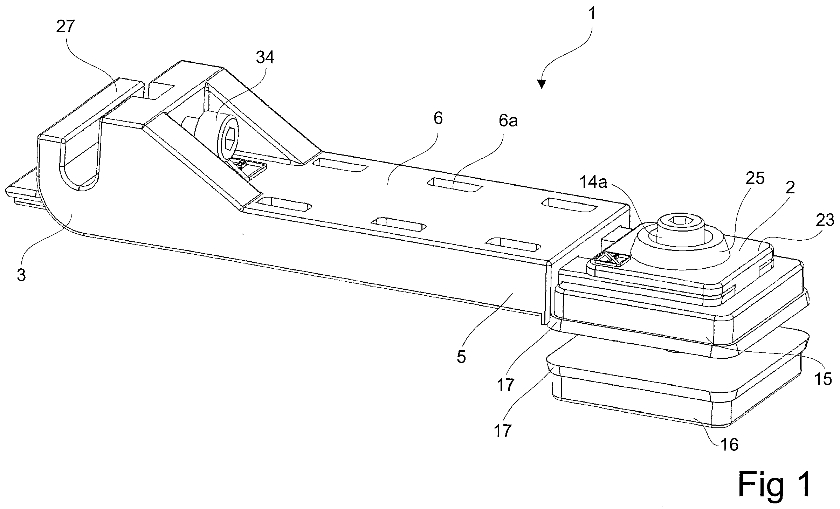

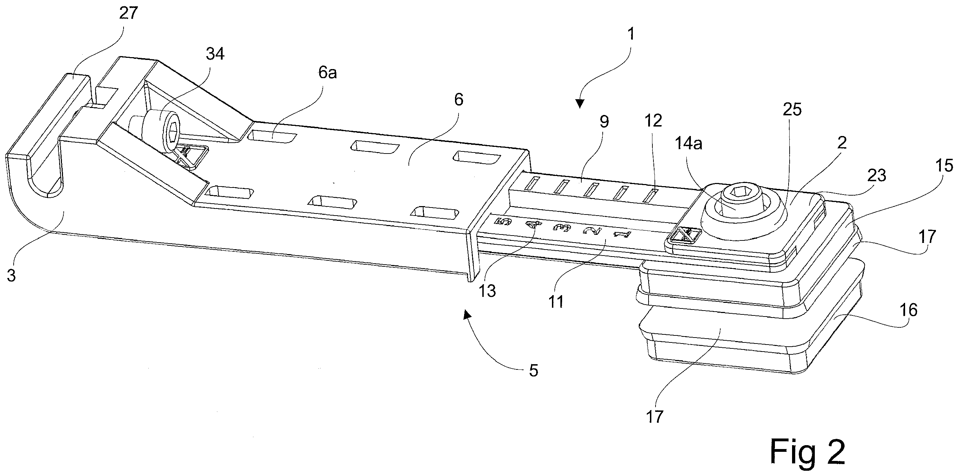

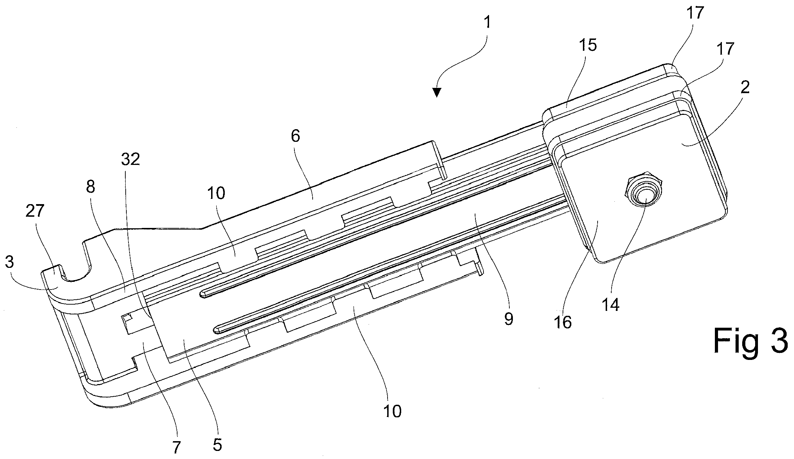

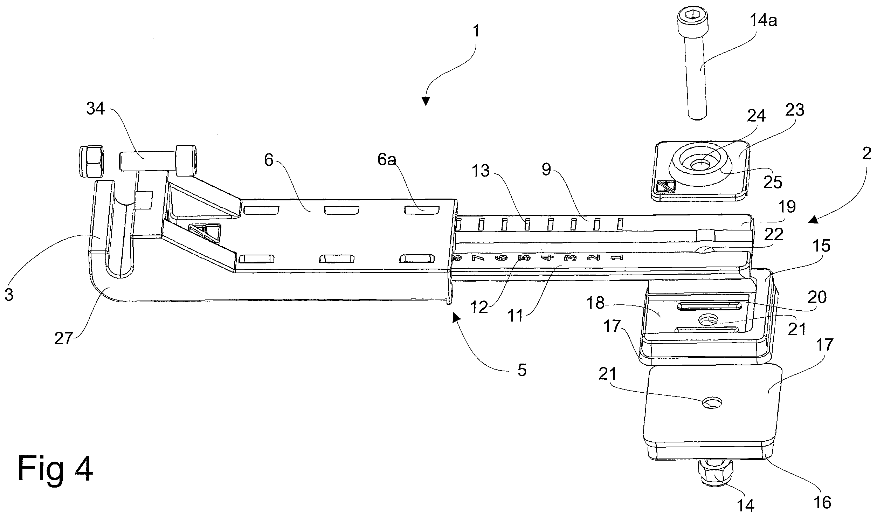

Fig. 1 and 2 shows perspective representations of an adjustable mounting 1, being part of a mounting assembly according to the present invention as defined by the appended claims, in a contracted and extended position, respectively. Fig. 3 shows the adjustable mounting 1 of fig. 2 in a different perspective, and fig. 4 is an exploded view of the adjustable mounting 1.

As shown in fig. 1 - 4, the adjustable mounting comprises a first mounting unit 2 arranged for being attached to a pane (not shown), a second mounting unit 3 arranged for being releasable attached to a structural element (not shown), and a connector assembly 5 arranged for telescopically connecting the first and second mounting unit 2,3.

As is best seen in fig. 3, the connector assembly comprises a housing 6 having a longitudinal track 7 at a bottom (first) side 8, seen in the position of use, and a telescopic member 9 arranged for being displaced in the longitudinal direction of said track 7. A number of projections 10 extends parallel to the track 7 for maintaining the telescopic member 9 in the track 7 during its longitudinal displacement back and forth.

At the front side 11 of the telescopic member 9 is placed a visual linear graduation 12, having marks 13 spaced apart thereby providing an especially simple and inexpensive adjustable mounting 1 according to the invention, in which the telescopic extension of said mounting 1 easily can be viewed by the operator during use. A number of openings 6a extends though the housing, e.g. allowing the markings to be viewed though the housing.

As can be seen in fig. 1, the adjustable mounting 1 is placed in a completely contracted position, whereas the housing 6 and telescopic member 9 in fig. 2 (and 3) has been displaced about 5.5. cm, i.e. the adjustable mounting is 5.5 cm longer than in the contracted position.

As is best seen in fig. 4, the first mounting unit comprises a first bolt and nut assembly 14, and a first and a second distribution plate 15,16, arranged for being placed on either side of the pane for distributing the forces over a larger surface area. Each distribution plate 15,16 comprises an elastomer disc 17 for abutting the pane thereby both providing a firm grip and preventing the pane from being scratched when the first bolt/nut assembly 14 is tightened.

The telescopic member 9 is connected to the first mounting unit 2 via the first distribution plate 15, that comprise a centrally recess 18 matching the dimensions of a first end 19 of the telescopic member 9. Said first end 19 further comprise two projections (not shown), arranged for being inserted in two complementary grooves 20 placed in the recess 18. The combination of the recess 18, and the projection/groove 20 arrangement prevents any sideways and/or lengthwise movement of the telescopic member 9 in relation to the first distribution plate 15, thereby ensuring that the components are placed in the correct position when the bolt 14a is inserted though aligned openings 21 in the first and second distribution plate with each their corresponding elastomer discs, and an opening 22 in the first end 19 of the telescopic member 9. A washer 23 with an opening 24, comprising a suitable sealing ring 25 is placed on the top of the telescopic member 9, in order to prevent damage to the upper side 26 of the telescopic member 9 when the first bolt/nut assembly 14 is tightened.

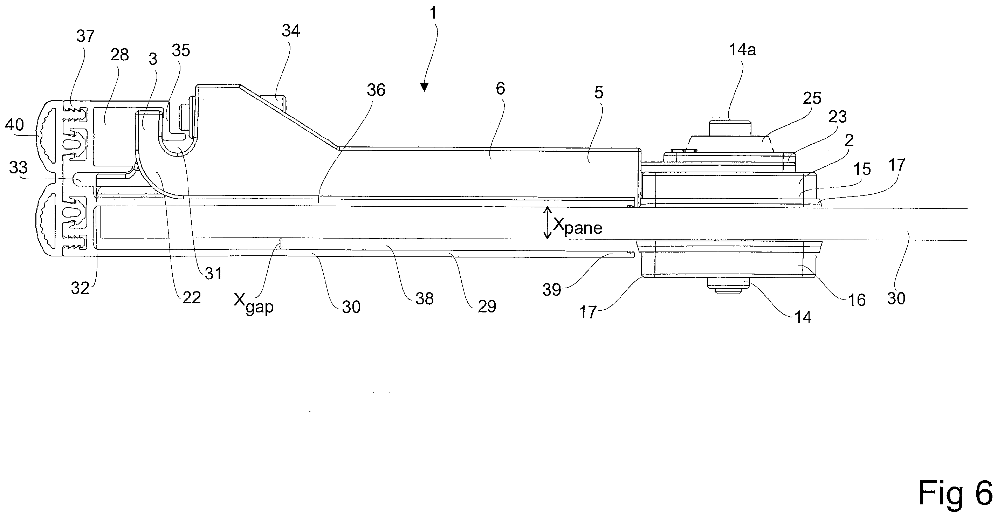

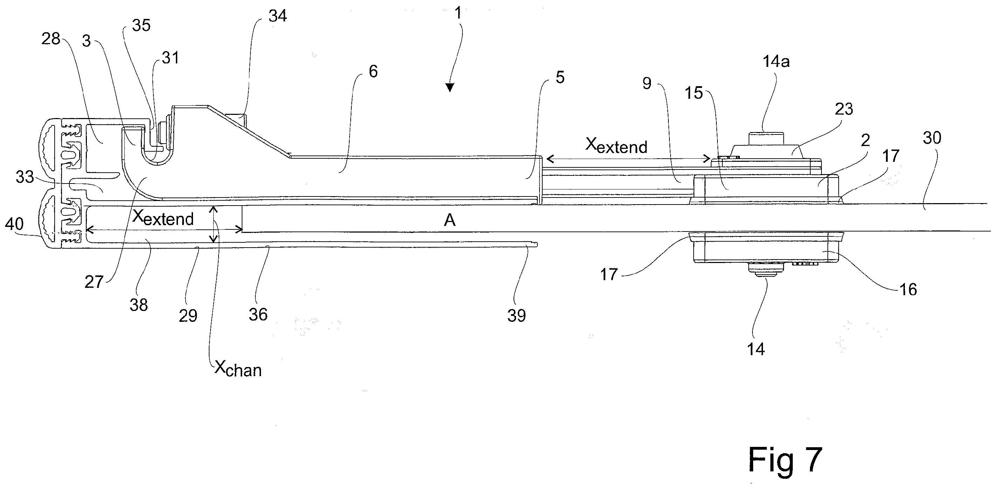

The second mounting unit 3 is integrated with the housing 6 and comprises a first elongated hook 27, arranged perpendicular to the longitudinal direction of the adjustable mounting 1, and arranged for engaging a complementary elongated notch 28 on the structural element 29, this is best seen in fig. 6 and 7 that will be described in further details below.

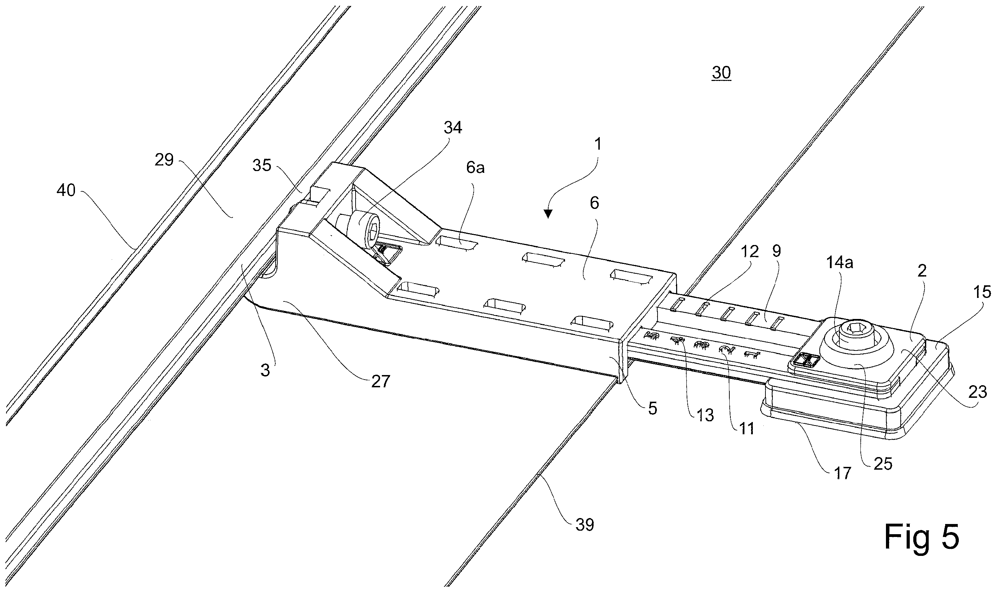

Fig. 5 shows a perspective of the adjustable mounting 1 in a position of use, i.e. when the adjustable mounting 1 has been attached to a pane 30 via the first mounting unit 2 and to an elongated structural element 29 via the second mounting unit 3. In the embodiment shown the pane is a solid glass plate, but said plate may equally well be a net, a cardboard plate, a wood plate, or any other relevant plate which can be connected to a structural element using the adjustable mounting according to the invention.

**Fig.** 6 shows the adjustable mounting 1 in a contracted position, and **fig.** 7 shows the adjustable mounting 1 where the telescopic member 9 is displaced relative to the housing 6 by a distance X_{extend}, thereby automatically displacing the pane in the channel 38 a similar distance X_{extend}, since the first and second mounting unit 2,3 is attached to the pane 30 and elongated structural element 29 respectively.

As can be seen from said figures the hook 27 have a shape and geometry configured to substantially match the elongated notch 28. The hook 27 may in one embodiment be inserted at one end of the elongated structural element 29 and slided to the correct position along the elongated element 29, by displacing the elongated element 29 and the adjustable mounting 1 relative to each other. This may **e.g.** be advantageously when the adjustable mounting 1 already has been connected to the pane 30 via the first mounting unit **2.** Alternatively, the second mounting unit 3 may be placed at an angled position at an opening 31 of the notch 28, and when the adjustable mounting 1 is moved to a plane parallel with the pane, said hook is guided to a correct placement in the notch 28 by the mutual geometry of said notch/hook. In the embodiment shown the front end 32 of the telescopic member 9 also engages an additional groove 33 in the elongated structural element 29.

After the hook 27 is placed in the notch 28 at the desired location along the elongated structural element 29, a second bolt/nut assembly 34 can be tightened whereby the bolt 34a engages a front side 35 of the notch 28, thereby ensuring that the adjustable mounting 1 remains at the correct position relative to the elongated element 29 during use.

As shown in **fig.** 6 and 7, each elongated structural element 29 is defined by two opposite and parallel longitudinal mounting plates 36, having the notch 28 at a first elongated side 37, and a channel 38, for receiving an area A of the pane 30, extending from the opposite second elongated side 39. The spacing between the two mounting plates 36 defines the channel 38, which preferably has a thickness X_{chan} which mainly corresponds to the thickness Xₚₐₙₑ of the pane with a small gap X_{gap} on one or both sides of the pane In the embodiment shown, a gasket 40 is placed at the first elongated side 37 for providing a tight seal if the final construction is placed e.g. in a structural opening such as a door or window opening. A person skilled in the art will however understand that said seal is optional and that the elongated structural element 29 at the first elongated side 37 may have other cross-sectional shapes.

The pane 30 is secured to the elongated structural element using the adjustable mounting 1 according to the invention, whereby the pane 30 will float in the channel 38, allowing the position of said pane 30 relative to the elongated structural element 29 to be adjusted, simply by adjusting the telescopic extension of the adjustable mounting 1.

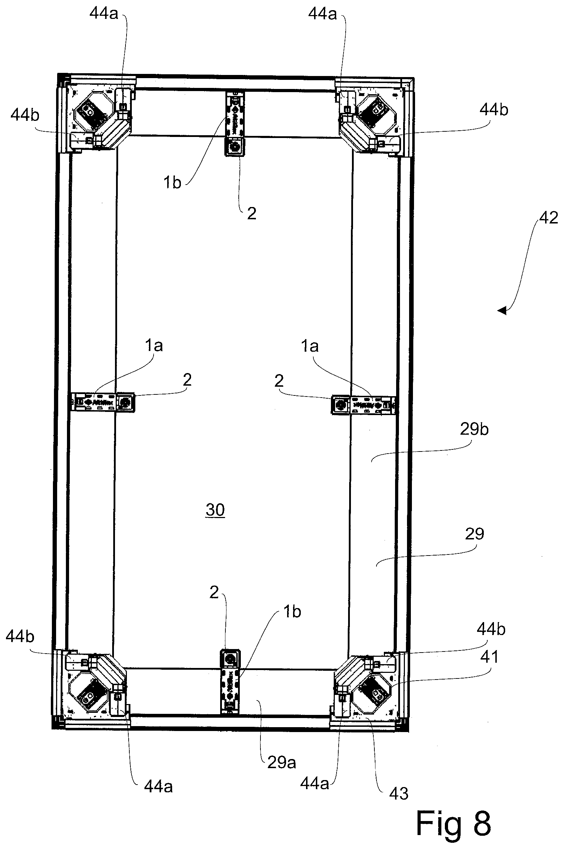

When four structural elements 29, as shown in fig. 5 - 7 are connected with four corner assemblies 41 each arranged for telescopically displacing two elongated structural elements 29, a structural frame 42 having the shape of e.g. a rectangle is provided. Such a frame is shown in fig. 8, and the dimensions of said frame 42 can easily can be adjusted.

The pane 30 is placed in the channels 38 of each elongated structural element 29, and is fixated to the structural frame 42 via an adjustable mounting 1 for each elongated element. Since the adjustable mounting 1 is securely fastened to both the elongated structural elements 29, via the second mounting unit 3, and the pane 30, via the first mounting unit 2, the pane 39 will float in said structural frame 42 and the telescopic extension of the adjustable mountings 1 will simply follow the telescopic extension of the elongated structural element 29 in the corner assembly 41, whereby the pane 30 always will remain in the structural frame 42 at a desired position, preferably in a centre position.

Such a structural frame 42 may be used in or as a large number of different structural components e.g. as an interim window or an interim door arranged for sealing a building during construction or renovation, or as an interim wall/partition arranged for preventing dust from spreading during construction and/or renovation work, and the like.

Furthermore, when e.g. a window opening later is closed by a permanent window, the interim window can easily be adjusted to fit a different opening with a different size. The structural frame can accordingly be used several times, both at the same construction site and on different construction sites.

In the embodiment shown the corner assembly 41 comprises a housing 43 defining a first and a second groove (not shown) arranged at a 90 degree angle to each other, and wherein the first groove is arranged for telescopically receiving and/or displacing a first elongated structural element and the second groove is arranged for telescopically receiving and/or displacing a second elongated structural element, and wherein the corner assembly further comprises a first and a second toggle clamps 44a,44b arranged for independently of each other releasably fastening the first and second elongated structural element in the corresponding first and second groove.

Thus, the structural frame can be adjusted in width by releasing one or both toggle clamps 44a holding the short elongated structural elements 29a, and displacing said elements lengthwise in their respective grooves. If the two adjustable mountings 1a does not comprise any first fastening means for locking the telescopic member relative to the longitudinal track, or if said fastening means are not activated, the adjustable members 1a, will automatically follow the extension/contraction and ensure that the pane 30 is equally displaced in the channels of the elongated structural element as shown in fig. 7. When the width has reach the desired length the toggle clamp(s) may be activated fastening the elongated structural element 29a in the corresponding grooves in the corner assembly.

In a similar way the structural frame 42 can be adjusted in height by release the one or more set of the toggle clamps 44b holding the long elongated structural elements 29b and displacing the long elongated structural elements in their respective grooves, whereby the other set of adjustable mountings 1b will follow said extension/contraction and displace the pane 30 in the corresponding grooves of the short elongated elements. Once the desired height of the frame 42 is obtained, the elongated structural elements 29b can be fixing to the corner assembles, by activating the toggle clamp(s) 44b It is thereby possible to provide a structural frame 42 which matches/fits structural opening with different dimensions, even though there may be variations between the respective openings. Furthermore, when e.g. a window opening later is closed by a permanent window, the interim window can easily be adjusted to fit a different opening having a different size. The structural frame can accordingly be used several times.

Modifications and combinations of the above principles and designs are foreseen within the scope of the present invention, which is defined by the appended claims.

## Claims

1. A mounting assembly comprising at least one adjustable mounting (1) and at least one structural element (29), and wherein the adjustable mounting (1) is arranged for attaching a pane (30) to the structural element (29), wherein said adjustable mounting (1) comprises a first mounting unit (2) arranged for being attached to the pane (30), a second mounting unit (3) arranged for being releasable attached to the structural element (29), and a connector assembly (5) arranged for telescopically connecting the first and second mounting unit (2,3), wherein the first mounting unit is arranged for extending through an opening in the pane, and **characterised in that** the structural element comprises an elongated notch (28) and the second mounting unit (3) comprises a first elongated hook (27), arranged perpendicular to the longitudinal direction of the adjustable mounting (1), and being arranged for engaging said complementary elongated notch (28) on the structural element (29).

2. The mounting assembly according to claim 1, wherein the connector assembly (5) comprises a housing (6) having a longitudinal track (7) at a first side (8), and a telescopic member (9) arranged for being displaced in the longitudinal direction in said longitudinal track (7).

3. The mounting assembly according to claim 1 or 2, wherein the telescopic member (9) comprise a measurement system (12), arranged for measuring the telescopic extension of the telescopic member (9) in the longitudinal track (7).

4. The mounting assembly according to any of the preceding claims, wherein the first mounting unit (2) is connected to, or integrated with, the telescopic member (9).

5. The mounting assembly according to any of the preceding claims, wherein the second mounting unit (3) is connected to, or integrated with, the housing (6) of the adjustable mounting (1).

6. The mounting assembly according to any of the preceding claims, wherein the first mounting unit (2) comprise a first and a second distribution plate (15,16) arranged for being placed on either side of the pane (30).

7. The mounting assembly according to claim 6, wherein the first distribution plate (15) comprise a centrally recess (18) matching the dimensions of a first end (19) of the telescopic member (9), and said first end (18) further comprise one or more projections, arranged for being inserted in complementary grooves (20) placed in the recess (18).

8. The mounting assembly according to according to any of the preceding claims, wherein the structural element (28) is elongated and the notch (28) is placed in the entire length of said elongated structural element (29).

9. The mounting assembly according to according to any of the preceding claims, wherein the structural element comprises a channel/opening (38) arranged for displaceably receiving an area of the pane (30) therein.

10. A structural frame (42) comprising four mounting assemblies according to any of the claims 1-9, the frame comprising four elongated structural elements (29) each comprising an elongated notch (28) and a channel (38) for displaceably receiving an area of a pane (30); and wherein said pane (30) is attached to the elongated structural elements by four adjustable mountings (1).

11. The structural frame (42) according to claim 10, wherein each corner of the structural frame is a corner assembly (41) arranged for telescopically displacing two elongated structural elements (29), one on either side of the corner assembly (41).

12. The structural frame (42) according to claim 10 or 11, wherein said structural frame is an interim window or an interim door arranged for sealing a building during construction or renovation, an interim wall/partition arranged for preventing dust from spreading during construction and/or renovation work, or a guardrail.

## Patentansprüche

1. Befestigungsanordnung, umfassend mindestens eine verstellbare Befestigung (1) und mindestens ein Strukturelement (29), und wobei die verstellbare Befestigung (1) zum Befestigen einer Scheibe (30) an dem Strukturelement (29) angeordnet ist,
wobei die verstellbare Befestigung (1) eine erste Befestigungseinheit (2), die zum Befestigen an der Scheibe (30) angeordnet ist, eine zweite Befestigungseinheit (3), die zum lösbaren Befestigen an dem Strukturelement (29) angeordnet ist, und eine Verbinderanordnung (5), die zum teleskopischen Verbinden der ersten und zweiten Befestigungseinheit (2, 3) angeordnet ist, umfasst,
wobei die erste Befestigungseinheit zum Erstrecken durch eine Öffnung in der Scheibe angeordnet ist, und
**dadurch gekennzeichnet, dass** das Strukturelement eine längliche Kerbe (28) umfasst und die zweite Befestigungseinheit (3) einen ersten länglichen Haken (27) umfasst, der senkrecht zu der Längsrichtung der verstellbaren Befestigung (1) angeordnet ist und zum Eingreifen in die komplementäre längliche Kerbe (28) an dem Strukturelement (29) angeordnet ist.

2. Befestigungsanordnung nach Anspruch 1, wobei die Verbinderanordnung (5) ein Gehäuse (6) mit einer Längsschiene (7) an einer ersten Seite (8) und ein Teleskopelement (9), das zum Verschieben in der Längsrichtung in der Längsschiene (7) angeordnet ist, umfasst.

3. Befestigungsanordnung nach Anspruch 1 oder 2, wobei das Teleskopelement (9) ein Messsystem (12) umfasst, das zum Messen der teleskopischen Erstreckung des Teleskopelements (9) in der Längsschiene (7) angeordnet ist.

4. Befestigungsanordnung nach einem der vorhergehenden Ansprüche, wobei die erste Befestigungseinheit (2) mit dem Teleskopelement (9) verbunden oder darin integriert ist.

5. Befestigungsanordnung nach einem der vorhergehenden Ansprüche, wobei die zweite Befestigungseinheit (3) mit dem Gehäuse (6) der verstellbaren Befestigung (1) verbunden oder darin integriert ist.

6. Befestigungsanordnung nach einem der vorhergehenden Ansprüche, wobei die erste Befestigungseinheit (2) eine erste und eine zweite Verteilungsplatte (15, 16) umfasst, die zum Platzieren auf beiden Seiten der Scheibe (30) angeordnet sind.

7. Befestigungsanordnung nach Anspruch 6, wobei die erste Verteilungsplatte (15) eine zentrale Aussparung (18) umfasst, die den Abmessungen eines ersten Endes (19) des Teleskopelements (9) entspricht, und das erste Ende (18) ferner einen oder mehrere Vorsprünge umfasst, die zum Einsetzen in komplementäre Nuten (20), die in der Aussparung (18) platziert sind, angeordnet sind.

8. Befestigungsanordnung nach einem der vorhergehenden Ansprüche, wobei das Strukturelement (28) länglich ist und die Kerbe (28) in der gesamten Länge des länglichen Strukturelements (29) platziert ist.

9. Befestigungsanordnung nach einem der vorhergehenden Ansprüche, wobei das Strukturelement einen Kanal/eine Öffnung (38) umfasst, der/die zum verschiebbaren Aufnehmen eines Bereichs der Scheibe (30) darin angeordnet ist.

10. Strukturrahmen (42), umfassend vier Befestigungsanordnungen nach einem der Ansprüche 1-9, wobei der Rahmen vier längliche Strukturelemente (29) umfasst, die jeweils eine längliche Kerbe (28) und einen Kanal (38) zum verschiebbaren Aufnehmen eines Bereichs einer Scheibe (30) umfassen; und wobei die Scheibe (30) an den länglichen Strukturelementen durch vier verstellbare Befestigungen (1) befestigt ist.

11. Strukturrahmen (42) nach Anspruch 10, wobei jede Ecke des Strukturrahmens eine Eckanordnung (41) ist, die zum teleskopischen Verschieben von zwei länglichen Strukturelementen (29), eines auf beiden Seiten der Eckanordnung (41), angeordnet ist.

12. Strukturrahmen (42) nach Anspruch 10 oder 11, wobei der Strukturrahmen ein Zwischenfenster oder eine Zwischentür, die zum Abdichten eines Gebäudes während des Baus oder der Renovierung angeordnet ist, eine Zwischenwand/-trennwand, die zum Verhindern, dass sich Staub während der Bau- und/oder Renovierungsarbeiten ausbreitet, angeordnet ist, oder eine Leitplanke ist.

## Revendications

1. Ensemble de montage comprenant au moins un montage réglable (1) et au moins un élément structurel (29), et le montage réglable (1) est conçu pour fixer un panneau (30) à l'élément structurel (29), ledit montage réglable (1) comprenant une première unité de montage (2) conçue pour être fixée au panneau (30), une seconde unité de montage (3) conçue pour être amovible attachée à l'élément structurel (29), et un ensemble de connecteur (5) conçu pour relier téléscopiquement les première et seconde unités de montage (2,3), la première unité de montage étant conçue pour s'étendre à travers une ouverture dans le panneau, et **caractérisé en ce que** l'élément structurel comprend une encoche allongée (28) et la seconde unité de montage (3) comprend un premier crochet allongé (27), disposé perpendiculairement à la direction longitudinale du montage réglable (1), et étant conçu pour engager ladite encoche allongée complémentaire (28) sur l'élément structurel (29).

2. L'ensemble de montage selon la revendication 1, dans lequel l'ensemble de connecteur (5) comprend un boîtier (6) ayant une piste longitudinale (7) sur un premier côté (8), et un élément télescopique (9) conçu pour être déplacé dans la direction longitudinale dans ladite piste longitudinale (7).

3. L'ensemble de montage selon la revendication 1 ou 2, dans lequel l'élément télescopique (9) comprend un système de mesure (12), conçu pour mesurer l'extension télescopique de l'élément télescopique (9) dans la piste longitudinale (7).

4. L'ensemble de montage selon l'une quelconque des revendications précédentes, dans lequel la première unité de montage (2) est connectée à, ou intégrée avec, l'élément télescopique (9).

5. L'ensemble de montage selon l'une quelconque des revendications précédentes, dans lequel la seconde unité de montage (3) est connectée à, ou intégrée avec, le boîtier (6) du montage réglable (1).

6. L'ensemble de montage selon l'une quelconque des revendications précédentes, dans lequel la première unité de montage (2) comprend une première et une seconde plaque de distribution (15, 16) conçues pour être placées de chaque côté du panneau (30).

7. L'ensemble de montage selon la revendication 6, dans lequel la première plaque de distribution (15) comprend un renfoncement central (18) correspondant aux dimensions d'une première extrémité (19) de l'élément télescopique (9), et ladite première extrémité (18) comprend en outre une ou plusieurs projections, conçues pour être insérées dans les rainures complémentaires (20) placées dans le renfoncement (18).

8. L'ensemble de montage selon l'une quelconque des revendications précédentes, dans lequel l'élément structurel (28) est allongé et l'encoche (28) est placée sur toute la longueur dudit élément structurel allongé (29).

9. L'ensemble de montage selon l'une quelconque des revendications précédentes, dans lequel l'élément structurel comprend un canal/une ouverture (38) conçu pour recevoir de manière déplaçable une zone du panneau (30) à l'intérieur.

10. Un cadre structurel (42) comprenant quatre ensembles de montage selon l'une quelconque des revendications 1-9, le cadre comprenant quatre éléments structurels allongés (29) chacun comprenant une encoche allongée (28) et un canal (38) conçu pour recevoir de manière déplaçable une zone d'un panneau (30); et dans lequel ledit panneau (30) est attaché aux éléments structurels allongés par quatre montages réglables (1).

11. Le cadre structurel (42) selon la revendication 10, où chaque coin du cadre structurel est un ensemble d'angle (41) conçu pour déplacer téléscopiquement deux éléments structurels allongés (29), un de chaque côté de l'ensemble d'angle (41).

12. Le cadre structurel (42) selon la revendication 10 ou 11, dans lequel ledit cadre structurel est une fenêtre provisoire ou une porte provisoire conçue pour sceller un bâtiment pendant la construction ou la rénovation, une cloison provisoire conçue pour empêcher la poussière de se propager pendant les travaux de construction et/ou de rénovation, ou une garde-corps.
